# EUROPEAN PATENT SPECIFICATION

(11) **EP 1 803 953 B1**
(45) Date of publication and mention of the grant of the patent: **06.11.2013**
(21) Application number: 05781963.3
(22) Date of filing: 09.09.2005
(51) Int. Cl.: F16C 33/78, F16C 19/18, F16C 33/58, F16C 33/80, F16C 41/00, G01P 3/487

(54) **BEARING DEVICE FOR WHEEL, HAVING ROTATION SPEED DETECTION DEVICE**
LAGERVORRICHTUNG FÜR EIN RAD MIT DREHZAHLERFASSUNGSVORRICHTUNG
DISPOSITIF DE ROULEMENT DE ROUE MUNI D'UN DISPOSITIF DE DETECTION DE VITESSE DE ROTATION

(30) Priority: 10.09.2004 JP 2004264194; 21.09.2004 JP 2004273180; 06.10.2004 JP 2004294107; 14.10.2004 JP 2004300362; 14.10.2004 JP 2004300363; 11.11.2004 JP 2004327307
(43) Date of publication of application: 04.07.2007
(73) Proprietor: NTN Corporation, Osaka-shi, Osaka 550-0003 (JP)
(72) Inventor: SHIGEOKA, Kazuhisa, NTN Corporation, Iwata-shi, Shizuoka 4388510 (JP); SUZUKI, Syougo, NTN Corporation, Iwata-shi, Shizuoka 4388510 (JP); ONO, Yujiro, NTN Corporation, Iwata-shi, Shizuoka 4388510 (JP); KOMORI, Kazuo, NTN Corporation, Iwata-shi, Shizuoka 4388510 (JP); FUKADA, Kikuo, NTN Corporation, Iwata-shi, Shizuoka 4388510 (JP)
(74) Representative: Thielmann, Andreas
(86) International application number: PCT/JP2005/016612
(87) International publication number: WO 2006/028209

(56) References cited:
- EP-A2- 1 342 633
- EP-A2- 1 705 089
- JP-A- 4 133 801
- JP-A- 6 109 027
- JP-A- 8 043 411
- JP-A- 10 160 744
- JP-A- 2002 372 548
- JP-A- 2003 187 368
- JP-A- 2003 254 985
- JP-A- 2005 300 289
- JP-U- 4 050 724
- JP-U- 5 055 070
- JP-U- 6 040 446
- US-A- 4 968 156
- US-A- 5 388 916
- US-A1- 2003 202 723

## Description

### BACKGROUND OF THE INVENTION

### Field of the Invention

The present invention relates to a wheel bearing apparatus for a wheel of vehicle, and more particularly to a wheel bearing apparatus to which is incorporated a wheel speed detecting apparatus for detecting a rotation speed of wheel of vehicle.

### Description of Background Art

It has been generally known a wheel bearing apparatus which can support a wheel of vehicle relative to a suspension apparatus and to which is incorporated a wheel speed detecting apparatus for detecting a rotation speed of wheel of vehicle to detect the wheel speed for controlling the anti-lock braking system (ABS). Such a bearing apparatus generally comprises a wheel speed detecting apparatus including a magnetic encoder having magnetic poles alternately arranged along its circumferential direction integrated in a sealing apparatus arranged between inner and outer members for containing rolling elements (balls or rollers), and a wheel speed detecting sensor for detecting the variation in magnetic poles of the magnetic encoder according to the rotation of wheel.

The wheel speed sensor is usually mounted on a knuckle after the wheel bearing apparatus has mounted on the knuckle forming a suspension apparatus. In recent, it has been proposed a wheel bearing apparatus incorporated with a wheel speed detecting apparatus in which a wheel speed detecting sensor is self-contained within the wheel bearing in order to reduce the size of the wheel bearing apparatus as well as to eliminate troublesome in air gap adjustment between the wheel speed sensor and the magnetic encoder.

An example of the wheel bearing apparatus incorporated with a wheel speed detecting apparatus is known in the prior art (e.g. Japanese Laid-open Patent Publication No. 2003/254985) as shown in Fig.15. This wheel bearing apparatus incorporated with a wheel speed detecting apparatus comprises an outer member 101 forming a stationary member secured on a suspension apparatus (not shown), and an inner member 102 (the inner member 102 includes a hub wheel 105 and an inner ring 106) inserted in the outer member 101 via double row rolling elements (balls) 103 and 103 therebetween. The outer member 101 has a wheel mount flange formed integrally therewith at one end and double row outer raceway surfaces 101a and 101a formed on the inner circumferential surface thereof. On the other hand, the inner member 102 is formed with double row inner raceway surfaces 105a and 106a opposite to the double row outer raceway surfaces 101a and 101a. One (105a) of these double row inner raceway surfaces is formed on the outer circumferential surface of the hub wheel 105 and the other (106a) is formed on the outer circumferential surface of the inner ring 106 press-fitted on the cylindrical portion 105b extending axially from the inner raceway surface 105a of the hub wheel 105. Double row rolling elements 103 and 103 are arranged between the outer and inner raceway surfaces 101a and 101a; 105a and 106a respectively and held by cages 107 and 107.

The hub wheel 105 has a wheel mount flange 104 for mount a wheel (not shown) formed integrally therewith and hub bolts 104a for securing the wheel are rigidly secured on the wheel mount flange 104 equidistantly along its periphery. A serration 105c is formed on the inner circumferential surface of the hub wheel 105 into which a stem portion 111 of an outer joint member 110 forming the constant velocity universal joint (not shown) is inserted. Seals 108 and 109 are arranged at both ends of the outer member 101 to prevent leak of grease contained within the bearing as well as ingress of rain water or dusts.

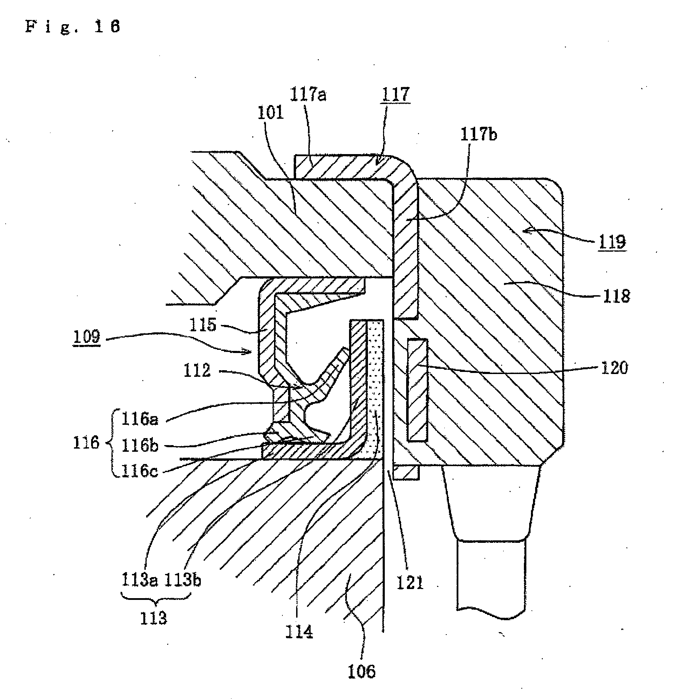

The seal 109 of the inboard side, as shown in an enlarged view of Fig. 16, is fitted in the inner circumference at the end of the outer member 101 and comprises a first sealing plate 112, and a second sealing plate 113 having a "L" shaped cross-section. The second sealing plate 113 has a cylindrical portion 113a fitted on the outer circumference of the inner ring 106, and a standing portion 113b extending radially outward from the cylindrical portion 113a. Adhered via vulcanized adhesion on the outer surface of the standing portion 113b is a magnetic encoder 114 formed of rubber magnet in which magnetic poles N and S are alternately arranged along the circumference direction.

On the other hand, the first sealing plate 112 comprises a metal core 115 having a substantially "L" shaped cross-section, and a sealing member 116 including a side lip 116a sliding contact with the inner side surface of the standing portion 113b of the second sealing plate 113 and a pair of radial lips 116b and 116c sliding contact with the cylindrical portion 113a of the second sealing plate 113.

Mounted on one end of the outer member 101 is an annular sensor holder 119 comprising a fitting cylinder 117 and a holding member 118 connected to the fitting cylinder 117. The fitting cylinder 117 has an annular configuration of "L" shaped cross-section and comprises a cylindrical portion 117a and a flange portion 117b extending radially inward from the cylindrical portion 117a.

The holding member 118 is made by synthetic resin molded to an annular body in which a wheel speed sensor 120 is embedded. The wheel speed sensor 120 is arranged opposite to the magnetic encoder 114 via a predetermined air gap therebetween. The wheel speed sensor 120 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

A labyrinth seal is formed by a small gap 121 by arranging the flange portion 117b of the fitting cylinder 117 with being opposed to the end surface of the inner ring 106 via the small gap 121. This enables to prevent ingress of foreign matter such as magnetic powder into a space between the magnetic encoder 114 and the detecting portion of the wheel speed sensor 120 from the outside of the bearing apparatus although before the stem portion 111 of the outer joint member 110 is inserted into the hub wheel 105 including a course in which the bearing apparatus is transferred to an assemble line of a manufacturer of automobile. Accordingly, the reliability of detecting the rotation speed of wheel can be improved. A rotation detecting device and an anti skid braking system using the same are known from EP 1 342 633 A2.

However, although the wheel bearing apparatus incorporated with a wheel speed detecting apparatus of the prior art has a superior effects mentioned above, it is impossible to prevent ingress of foreign matter such as magnetic powder into a space between the magnetic encoder 114 and the detecting portion of the wheel speed sensor 120 from the outside of the bearing apparatus under severe circumstances in real running of vehicle.

### SUMMARY OF THE INVENTION

It is, therefore, an object of the present invention to provide a wheel bearing apparatus incorporated with a wheel speed detecting apparatus which is small in size and can prevent ingress of foreign matter into the wheel speed detecting region and thus can improve the durability as well as the reliability.

For achieving the object mentioned above, there is provided, according to the present invention of claim 1, a wheel bearing apparatus incorporated with a wheel speed detecting apparatus comprising: an outer member having double row outer raceway surfaces formed on its inner circumferential; an inner member including a hub wheel having a wheel mount flange formed integrally therewith at one end thereof and a cylindrical portion axially extending from the wheel mount flange, and an inner ring fitted on the cylindrical portion of the hub wheel, double row inner raceway surfaces opposite to the double row outer raceway surfaces being formed on the outer circumferential surfaces of the hub wheel and inner ring respectively; an inboard side end of said outer member is positioned outboard of an inboard side end of said inner ring; double row rolling elements arranged between the outer and inner raceway surfaces; an encoder mounted on the outer circumferential surface of the inner ring; an annular sensor holder arranged on the end of the outer member oppositely to the encoder, said sensor holder including an annular fitting member and a holding member, said annular fitting member including an axially extending portion radially spaced from said inner ring; a wheel rotation speed detecting sensor molded integrally with the sensor holder and arranged oppositely to the encoder via a predetermined radial gap characterized in: that the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other so that the seal is sandwiched between the axially extending potion of the annular fitting member of the sensor holder and the inner ring; the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion.

According to the present invention of claim 1, since the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other so that the seal is sandwiched between the axially extending potion of the annular fitting member of the sensor holder and the inner ring; the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion, it is possible to prevent ingress of foreign matter such as magnetic powder into a space between the magnetic encoder and the detecting portion of the wheel speed sensor from the outside of the bearing apparatus although before the stem portion of the outer joint member is inserted into the hub wheel including a course in which the bearing apparatus is transferred to an assemble line of a manufacturer of automobile and also under severe circumstances in real running of vehicle. Thus it is also possible to remarkably improve the reliability of detection of the wheel rotation speed.

According to the present invention of claim 2, the encoder is formed of a magnetic encoder in which poles N and S are alternately arranged along its circumference. This makes it possible to detect the wheel rotation speed with high accuracy and low cost.

According to the present invention of claim 3, the sensor holder includes an annular fitting member of steel sheet and a holding member, the fitting member including a cylindrical fitting portion press-fitted on the outer circumferential surface of the outer member, a flange portion extending radially inward from the fitting portion and adapted to be close contacted on the end surface of the outer member, and a cylindrical portion extending axially from the flange portion, and the first sealing plate being fitted in the cylindrical portion. This makes it possible to reduce the radial dimension of the wheel bearing apparatus, to simplify the associated parts of wheel rotation speed detecting sensor, and thus to further improve the workability of assembly.

According to the present invention of claim 4, the annular fitting member is press-formed of non-magnetic steel plate having corrosion resistance. This makes it possible to prevent the detecting performance of the wheel rotation speed detecting sensor from being exerted harmful influences and also to further improve the durability of the seal.

It is preferable as defined in claim 5 that a smaller diameter portion is formed on the outer circumferential surface of the inner ring, and that the seal is mounted within an annular space formed between the smaller diameter portion and the sensor holder. This makes it possible to assure a sufficient height of the seal and thus to remarkably improve the tightness of sealing.

It is also preferable as defined in claim 6 that the second sealing plate has a cylindrical portion and a standing portion extending radially outward from the cylindrical portion, and wherein a sealing member is integrally adhered to the first sealing plate via vulcanized adhesion and lips of the sealing member are sliding contacted with the cylindrical portion and the standing portion.

It is preferable as defined in claim 7 that the second sealing plate has a cylindrical portion, a larger cylindrical portion and a standing portion extending radially outward from the larger cylindrical portion, and that a sealing member is integrally adhered to the first sealing plate via vulcanized adhesion and lips of the sealing member are sliding contacted with the larger cylindrical portion and the standing portion.

It is also preferable as defined in claim 8 that a ring shaped elastic member is elastically fitted within an annular space between the larger cylindrical portion and the outer circumferential surface of the inner ring. This makes it possible to remarkably improve the tightness of seal in the fitting portion between the larger cylindrical portion and the inner ring and thus to prevent ingress of rain water or dusts from the circumstances into the bearing for a long term.

It is preferable as defined in claim 9 that the cylindrical portion is projected from a larger end face of the inner ring. This makes it possible to reduce the width of the inner ring to the minimum and thus to further reduce the weight and size of the bearing apparatus in order to improve the fuel consumption of vehicle.

It is preferable as defined in claim 10 that the encoder and the wheel rotation speed detecting sensor are arranged at a predetermined angle. The inclination of the encoder enables to increase the volume of the magnet and thus to increase the magnetic flux density of the magnetic encoder. This makes it possible to set a large air gap between the encoder and the sensor and thus to improve the freedom of design and to simplify the assembling workability.

It is preferable as defined in claim 11 that a shield having a substantially "C" shaped cross-sectional configuration is arranged at the inboard side of the seal so that it is opposed to a shoulder of the outer joint member via a small radial gap to form a labyrinth seal therebetween. The formation of labyrinth seal due to provision of the "C" shaped shield makes it possible to further improve the tightness of sealing during actual running of vehicle.

It is also preferable as defined in claim 12 that the shield comprises a first cylindrical portion fitted into the sensor holder, a standing portion extending radially inward from the first cylindrical portion and a second cylindrical portion axially extending from the standing portion, and that the standing portion is opposed to the second sealing plate via a small axial gap to form a labyrinth seal therebetween.

It is also preferable as defined in claim 13 that the shield comprises a first cylindrical portion fitted into the sensor holder, a standing portion extending radially inward from the first cylindrical portion and a second cylindrical portion axially extending from the standing portion, and that the second cylindrical portion is opposed to the end face of the inner ring via a small axial gap to form a labyrinth seal therebetween.

According to the present invention of claim 14, there is further provided a wheel bearing apparatus incorporated with a wheel speed detecting apparatus comprising: an outer member having double row outer raceway surfaces formed on its inner circumferential; an inner member including a hub wheel having a wheel mount flange formed integrally therewith at one end thereof and a cylindrical portion axially extending from the wheel mount flange, and an inner ring fitted on the cylindrical portion of the hub wheel, double row inner raceway surfaces opposite to the double row outer raceway surfaces being formed on the outer circumferential surfaces of the hub wheel and inner ring respectively; an inboard side end of said outer member is positioned outboard of an inboard side end of said inner ring; double row rolling elements arranged between the outer and inner raceway surfaces; an encoder mounted on the outer circumferential surface of the inner ring; a sensor holder including an annular fitting member, and a holding member, said annular fitting member including an axially extending portion radially spaced from said inner ring, in which a wheel rotation speed detecting sensor is embedded with being arranged oppositely to the encoder via a predetermined radial gap characterized in: that the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other so that the seal is sandwiched between the axially extending portion of the annular fitting member of the sensor holder and the inner ring, and that the sensor holder is arranged radially inward from the outer circumferential surface of a knuckle fitting surface of the outer member, that terminals for taking out output signal from the wheel rotation speed detecting sensor extend radially outward and are connected to wire harnesses circumferentially arranged along the end surface of the outer member; and that the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion.

According to the present invention of claim 14, since the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other so that the seal is sandwiched between the axially extending portion of the annular fitting member of the sensor holder and the inner ring, and that the sensor holder is arranged radially inward from the outer circumferential surface of a knuckle fitting surface of the outer member, that terminals for taking out output signal from the wheel rotation speed detecting sensor extend radially outward and are connected to wire harnesses circumferentially arranged along the end surface of the outer member; and that the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion, it is possible to simplify the associated parts of wheel rotation speed detecting sensor, and thus to further improve the workability of assembly and to prevent the holding member and the wire harnesses from being projected radially outward and causing interference with the suspension apparatus of vehicle.

### Effects of the Invention

A wheel bearing apparatus incorporated with a wheel speed detecting apparatus of the present invention comprises an outer member having double row outer raceway surfaces formed on its inner circumferential; an inner member including a hub wheel having a wheel mount flange formed integrally therewith at one end thereof and a cylindrical portion axially extending from the wheel mount flange, and an inner ring fitted on the cylindrical portion of the hub wheel, double row inner raceway surfaces opposite to the double row outer raceway surfaces being formed on the outer circumferential surfaces of the hub wheel and inner ring respectively; an inboard side end of said outer member is positioned outboard of an inboard side end of said inner ring; double row rolling elements arranged between the outer and inner raceway surfaces; an encoder mounted on the outer circumferential surface of the inner ring; an annular sensor holder arranged on the end of the outer member oppositely to the encoder, said sensor holder including an annular fitting member and a holding member, said annular fitting member including an axially extending portion radially spaced from said inner ring; a wheel rotation speed detecting sensor molded integrally with the sensor holder and arranged oppositely to the encoder via a predetermined radial gap characterized in: that the encoder has an annular ring configuration and its characteristics varying alternately and equidistantly along its circumferential direction; that a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other, so that the seal is sandwiched between the axially extending potion of the annular fitting member of the sensor holder and the inner ring; the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion. Thus it is possible to prevent ingress of foreign matter such as magnetic powder into a space between the magnetic encoder and the detecting portion of the wheel speed sensor from the outside of the bearing apparatus although before the stem portion of the outer joint member is inserted into the hub wheel including a course in which the bearing apparatus is transferred to an assemble line of a manufacturer of automobile and also under severe circumstances in real running of vehicle. Thus it is also possible to remarkably improve the reliability of detection of the wheel rotation speed.

Another wheel bearing apparatus incorporated with a wheel speed detecting apparatus of the present invention comprises an outer member having double row outer raceway surfaces formed on its inner circumferential; an inner member including a hub wheel having a wheel mount flange formed integrally therewith at one end thereof and a cylindrical portion axially extending from the wheel mount flange, and an inner ring fitted on the cylindrical portion of the hub wheel, double row inner raceway surfaces opposite to the double row outer raceway surfaces being formed on the outer circumferential surfaces of the hub wheel and inner ring respectively; an inboard side end of said outer member is positioned outboard of an inboard side end of said inner ring; double row rolling elements arranged between the outer and inner raceway surfaces; an encoder mounted on the outer circumferential surface of the inner ring; a sensor holder including an annular fitting member, and a holding member, said annular fitting member including an axially extending portion radially spaced from said inner ring, in which a wheel rotation speed detecting sensor is embedded with being arranged oppositely to the encoder via a predetermined radial gap characterized in: that the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other so that the seal is sandwiched between the axially extending portion of the annular fitting member of the sensor holder and the inner ring, and that the sensor holder is arranged radially inward from the outer circumferential surface of a knuckle fitting surface of the outer member, that terminals for taking out output signal from the wheel rotation speed detecting sensor extend radially outward and are connected to wire harnesses circumferentially arranged along the end surface of the outer member; and that the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion. Accordingly it is possible to simplify the wheel rotation speed detecting sensor and its associated parts, and thus to further improve the workability of assembly and to prevent the holding member and the wire harnesses from being projected radially outward and causing interference with the suspension apparatus of vehicle.

### Best mode for carrying out the present invention

Best mode for carrying out the present invention is a wheel bearing apparatus incorporated with a wheel speed detecting apparatus comprising: an outer member having double row outer raceway surfaces formed on its inner circumferential; an inner member including a hub wheel having a wheel mount flange formed integrally therewith at one end thereof and a cylindrical portion axially extending from the wheel mount flange, and an inner ring fitted on the cylindrical portion of the hub wheel, double row inner raceway surfaces opposite to the double row outer raceway surfaces being formed on the outer circumferential surfaces of the hub wheel and inner ring respectively; an inboard side end of said outer member is positioned outboard of an inboard side end of said inner ring; double row rolling elements arranged between the outer and inner raceway surfaces; an encoder mounted on the outer circumferential surface of the inner ring; an annular sensor holder arranged on the end of the outer member oppositely to the encoder; said sensor holder including an annular fitting member and a holding member, said annular fitting member including an axially extending portion radially spaced from said inner ring; a wheel rotation speed detecting sensor molded integrally with the sensor holder and arranged oppositely to the encoder via a predetermined radial gap characterized in: that the encoder has an annular ring configuration and its characteristics varying alternately and equidistantly along its circumferential direction; a seal is arranged at the inboard side of the wheel rotation speed detecting sensor, said seal including a first annular sealing plate fit on an inner circumferential surface of the axially extending portion of the annular fitting member of the sensor holder, the seal including second annular sealing plate mounted on the inner ring and said first and second annular plates oppose each other, so that the seal is sandwiched between the axially extending potion of the annular fitting member of the sensor holder and the inner ring; the annular fitting member comprises a cylindrical fitting portion press-fitted on the outer circumferential surface of the outer member, a flange portion extending radially inward from the fitting portion, a conical portion extending axially inboard from the flange portion, and a cylindrical portion axially extending from the tip of the conical portion.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a wheel bearing apparatus incorporated with a wheel speed detecting apparatus;
Fig. 2 is a partially enlarged longitudinal-section view of Fig. 1;
Fig. 3 is a longitudinal-section view of a second embodiment of a wheel bearing apparatus incorporated with a wheel speed detecting apparatus;
Fig. 4 is a partially enlarged view of a third embodiment of a wheel bearing apparatus incorporated with a wheel speed detecting apparatus of the present invention;
Fig. 5 is a partially enlarged view of a fourth embodiment of a wheel bearing apparatus incorporated with a wheel speed detecting apparatus of the present invention;
Fig. 6 is a partially enlarged view of a fifth embodiment of a wheel bearing apparatus incorporated with a wheel speed detecting apparatus;
Fig. 7 is a partially enlarged view of a sixth embodiment of a wheel bearing apparatus incorporated with a wheel speed detecting apparatus;
Fig. 8 is a longitudinal-section view of a seventh embodiment of a wheel bearing apparatus incorporated with a wheel speed detecting apparatus of the present invention;
Fig.9 is a side elevation view of Fig. 8;
Figs. 10 (a) and 10 (b) are a partially enlarged cross sectional view and a side elevation view respectively of Fig. 8;
Fig. 11 is a partially enlarged cross sectional view of Fig. 8 at a position different from that of Fig. 10 (a);
Fig. 12 is a partially enlarged view of an eighth embodiment of a wheel bearing apparatus incorporated with a wheel speed detecting apparatus of the present invention;
Fig. 13 is a partially enlarged view of a ninth embodiment of a wheel bearing apparatus incorporated with a wheel speed detecting apparatus of the present invention;
Fig. 14 is a partially enlarged view of a tenth embodiment of a wheel bearing apparatus incorporated with a wheel speed detecting apparatus of the present invention;

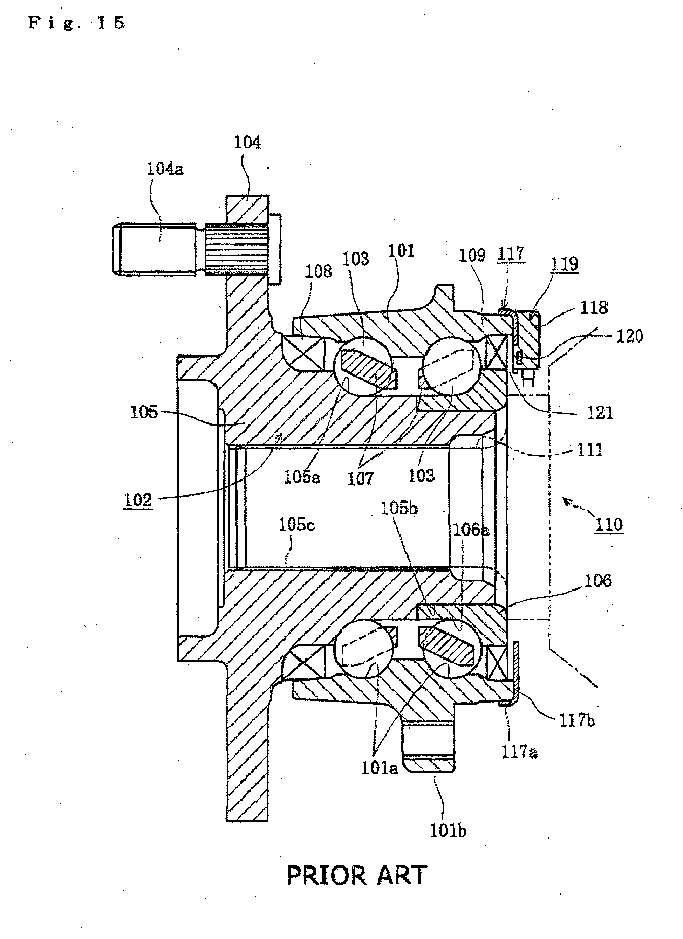

Fig. 15 is a longitudinal-section view of a wheel bearing apparatus incorporated with a wheel speed detecting apparatus of prior art; and
Fig. 16 is a partially enlarged cross sectional view of Fig. 15.

### DESCRIPTION OF THE PREFERRED EMBODIMENTS

Preferred embodiments of the present invention will be described with reference to accompanied drawings.

### First embodiment

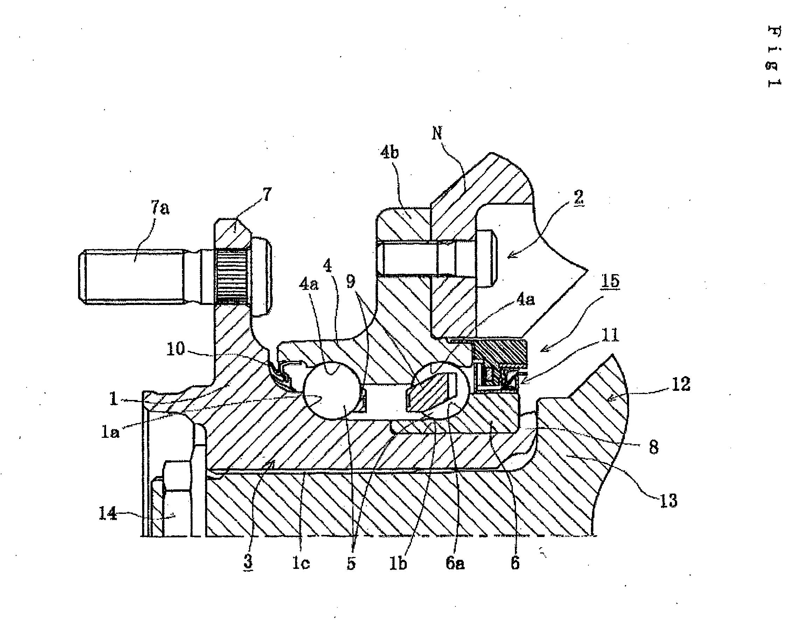

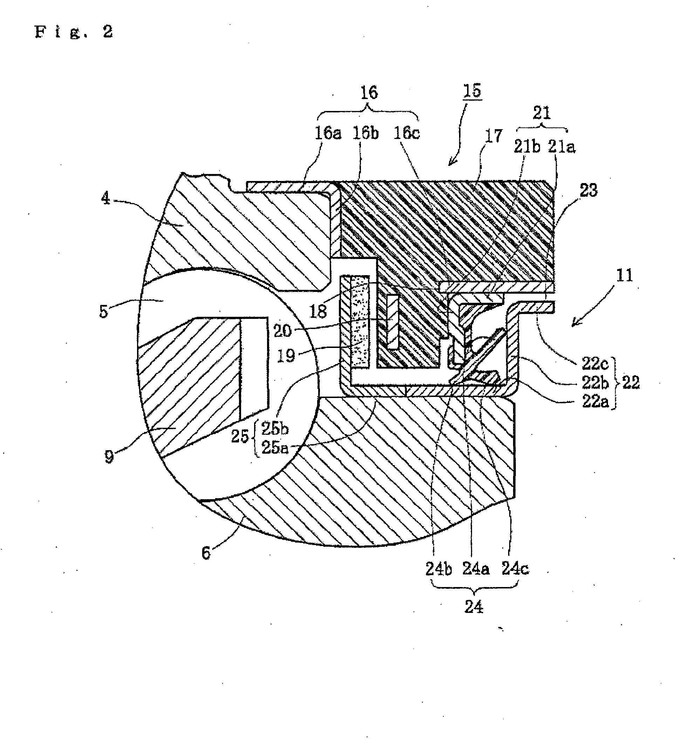

Fig. 1 is a longitudinal-section view of a first embodiment of a wheel bearing apparatus incorporated with a wheel speed detecting apparatus, and Fig. 2 is a partially enlarged longitudinal-section view of Fig. 1. In the description, an outer side of a bearing apparatus when it is mounted on a vehicle is referred to as "outboard" side (the left side in a drawing), and an inner side of a bearing apparatus when it is mounted on a vehicle is referred to as "inboard" side (the right side in a drawing).

The wheel bearing apparatus incorporated with a wheel speed detecting apparatus is that for a driving wheel in which a hub wheel 1 and a double row rolling bearing 2 are formed as a unit arrangement and thus has a structure of so-called a "third generation".
The double row rolling bearing 2 comprises an outer member 4, an inner member 3, and double row rolling elements (balls) 5 and 5. The outer member 4 is made of medium carbon steel including carbon of 0.40 ~ 0.80% by weight and formed at its outer circumferential surface integrally with body mount flange 4b adapted to be mounted on a knuckle N and also formed at its inner circumferential surface with double row outer raceway surfaces 4a and 4a hardened by high frequency induction quenching to have a surface hardness of 54 - 64 HRC.

On the other hand, the hub wheel 1 is formed integrally with a wheel mount flange 7 for mounting a wheel (not shown) at its outboard end and hub bolts 7a are secured thereon at its circumferentially equidistant positions. The outer circumferential surface of the hub wheel 1 is formed with one inner raceway surface 1a corresponding to one of the double row outer raceway surfaces 4a and 4a and a cylindrical portion 1b extends axially from the inner raceway surface 1a. A caulked portion 8 is formed by plastically deforming radially outward the end of the cylindrical portion 1b. An inner ring 6 is press-fitted onto the cylindrical portion 1b and formed with the other inner raceway surface 6a corresponding to the other of the double row outer raceway surfaces 4a and 4a. The inner ring 6 is secured axially immovable relative to the hub wheel 1 by the caulked portion 8 and thus so-called a self-retaining structure is formed. Thus it is possible to reduce the weight and size of the bearing apparatus, to improve the strength and durability of the hub wheel 1 and also to maintain an amount of preload of the bearing apparatus for a long term since any fastening means such as a nut in not required to control an amount of preload of the bearing apparatus. In this description, the inner member 3 comprises the hub wheel 1 and the inner ring 6 press-fitted on the hub wheel 1.

The double row rolling elements 5 and 5 are contained between the outer raceway surfaces 4a and 4a of the outer member 4 and the oppositely arranged inner raceway surfaces 1a and 6a and held by cages 9 and 9. Seals 10 and 11 are arranged at the ends of the outer member 4 to prevent leak of grease contained within the bearing apparatus as well as ingress of rain water or dusts.

The hub wheel 1 is made of medium carbon steel such as S53C including carbon of 0.40 ~ 0.80% by weight and is formed with a hardened layer having surface hardness 54□'64 HRC by high frequency induction hardening from the seal land portion to which the outboard seal 10 sliding contacts to the inner raceway surface 1a and cylindrical portion 1b. The caulked portion 8 is not heat treated as having the surface hardness less than 25 HRC. Thus it is possible not only to improve the wear resistance of the seal land forming the base of the wheel mount flange 7 but to provide a sufficient mechanical strength against the rotary bending load applied to the wheel mount flange 7 and thus to improve the durability of the hub wheel 1. In addition it is possible to improve the workability of the caulked portion 8 during plastic deformation thereof and to prevent generation of clacking during deformation and thus to improve the reliability of quality.

The hub wheel 1 is formed with a serration (or spline) 1c on its inner peripheral surface into which a outer joint member 12 forming a constant velocity universal joint is inserted. A shoulder 13 of the outer joint member 12 is abutted on the caulked portion 8 of the hub wheel 8 and is axially secured integrally with the hub wheel 1 by a nut 14.

As clearly shown in Fig. 2, a sensor holder 15 having an annular configuration comprises an annular fitting member 16 and a holding member 17 and is fitted on the end of the outer member 4. The annular fitting member 16 is formed wholly as an annular body and comprises a cylindrical fitting portion 16a press-fitted on the outer circumferential surface of the outer member 4, a flange portion 16b extending radially inward from the fitting portion 16a and adapted to be close contacted on the end surface of the outer member 4, and a cylindrical portion 16c extending axially from the flange portion 16b. The annular fitting member 16 is press-formed of stainless steel having corrosion resistance. The holding member 17 is molded integrally with the annular fitting member 16 by providing several apertures 18 on the cylindrical portion 16c. The seal 11 is arranged at the inboard side of the sensor holder 15.

A wheel speed detecting sensor 20 is embedded within the holding member 17 and arranged oppositely to a magnetic encoder 19 via a predetermined radial gap. The wheel speed sensor 20 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

The inboard seal 11 comprises first and second annular sealing plates 21 and 22 each having a substantially "L" shaped cross-sectional configuration mounted respectively on the sensor holder 15 and the inner ring 6 and arranged oppositely toward each other. The second sealing plate 22 comprises cylindrical portion 22a fitted on the inner ring 6, and a standing portion 22b extending radially outward from the cylindrical portion 22a. An annular tongue 22c extends axially from the tip of the standing portion 22b and forms a labyrinth seal 23 with being opposed to the cylindrical portion 16c of the sensor holder 15 via a small radial gap. The second sealing plate 22 is made by press-forming of austenitic stainless steel sheet (JIS SUS 304 etc.) or preserved cold rolled sheet (JIS SPCC etc.) .

On the other hand, the first sealing plate 21 comprises a cylindrical portion 21a fitted in the sensor holder 15, and a standing portion 21b extending radially inward from one end of the cylindrical portion 21a. A sealing member 24 having a side lip 24a, a grease lip 24b and a medium lip 24c is made of elastic material such as rubber etc. and adhered to the sealing plate 21 via vulcanized adhesion.

The side lip 24a is contacted slidably with the standing portion 22b of the second sealing plate 22, and the grease lip 24b and medium lip 24c are contacted slidably with the cylindrical portion 22a of the second sealing plate 22. A base 25 of steel is arranged on the inner ring 6 oppositely to the inboard seal 11 with respect the holding member 17 of the sensor holder. The base 25 is formed as having a substantially "L" shaped cross-section by press forming of ferromagnetic steel such as ferritic stainless steel sheet (JIS SUS 430 etc.) or preserved cold rolled sheet (JIS SPCC etc.). The base 25 comprises a cylindrical portion 25a fitted on the inner ring 6, and a standing portion 25b extending radially outward from the cylindrical portion 25a. Adhered via vulcanized adhesion on the inboard surface of the standing portion 25a is a magnetic encoder 19 formed of elastomer such as rubber etc. with which magnetic powder is mingled. The magnetic encoder 19 has poles N and S alternately arranged along its circumferential direction and forms a rotary encoder for detecting the wheel rotation speed.

As can be seen from the description of the first embodiment, since the wheel speed sensor 20 is arranged within the sensor holder 15, the seal 11 is arranged at the inboard side of the wheel speed sensor 20, and in addition the labyrinth seal 23 is formed at the inboard side of the seal 11, it is possible to prevent ingress of foreign matter such as magnetic powder into a space between the magnetic encoder 19 and the wheel speed sensor 20 from the outside of the bearing apparatus although before the outer joint member 12 is inserted into the hub wheel 1 including a course in which the bearing apparatus is transferred to an assemble line of a manufacturer of automobile and also under severe circumstances in real running of vehicle. Accordingly it is also possible to remarkably improve the reliability of detection of the wheel rotation speed. In addition, it is possible to reduce the radial dimension of the wheel bearing apparatus, to simplify the associated parts of the sensor 20, and to improve the workability in assembly of the wheel bearing apparatus.

Although it is exemplary shown in this embodiment that the wheel rotation speed sensor 20 comprises the magnetic encoder 19 and the magnetic detecting element such as Hall effect element, the wheel speed detecting apparatus is not limited to such a structure and may be a passive type apparatus comprising a magnetic encoder, magnets, and annular coils etc.

### Second embodiment

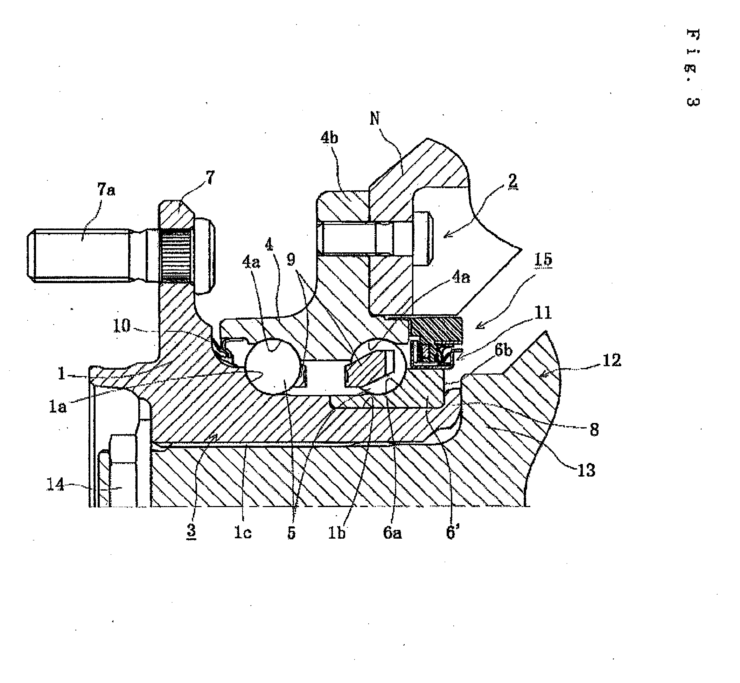

Fig. 3 is a partially enlarged view showing a second embodiment of the wheel bearing apparatus incorporated with a wheel speed detecting apparatus. This second embodiment is different from the first embodiment only in the mounting structure of the inboard seal 11. Same reference numerals are used also in the second embodiment for designating same parts having same functions of parts as those used in the first embodiment.

Although the inboard seal 11 is same as that of the first embodiment, however different from it in the mounting structure of the seal 11. That is, the seal 11 mounted on the sensor holder 15 and the inner ring 6' and comprises the annular first and second sealing plates 21, 22 each having a substantially "L" shaped cross-section and arranged oppositely toward each other. The cylindrical portion 22a of the second sealing plate 22 is fitted on the inner ring 6' having an axial length shorter than the inner ring 6 of the first embodiment. Thus the cylindrical portion 22a is projected toward the inboard side from the larger end face 6b of the inner ring 6'. Thus it is possible to mount the inboard seal 11 on the inner ring having a smaller axial length (width) reduced to the minimum and thus to further reduce the weight and size of the bearing apparatus in order to improve the fuel consumption of vehicle.

### Third embodiment

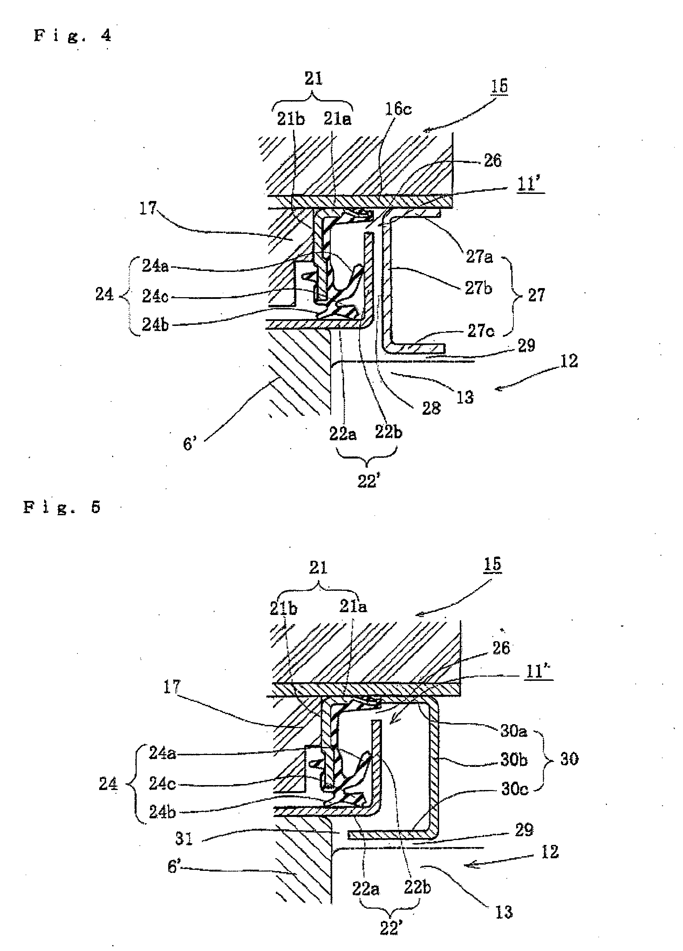

Fig. 4 is a partially enlarged view showing a third embodiment of the wheel bearing apparatus incorporated with a wheel speed detecting apparatus of the present invention. This third embodiment is different from the second embodiment only in the structure of the labyrinth seal. Same reference numerals are used also in this third embodiment for designating same parts having same functions of parts as those used in the second embodiment.

The inboard seal 11' comprises first and second annular sealing plates 21 and 22' each having a substantially "L" shaped cross-sectional configuration and mounted on the sensor holder 15 and the inner ring 6' oppositely toward each other. The second sealing plate 22' comprises cylindrical portion 22a fitted on the inner ring 6', and a standing portion 22b extending radially outward from the cylindrical portion 22a. The standing portion 22b is opposed to the cylindrical portion 21a of the first sealing plate 21 via a small radial gap to form a labyrinth seal 26 therebetween.

In this embodiment, a shield 27 is additionally arranged at the inboard side of the seal 11'. The shield 27 includes a first cylindrical portion 27a adapted to be fitted in the sensor holder 15, a standing portion 27b extending radially inward from the first cylindrical portion 27a, and a second cylindrical portion 27c extending axially from the standing portion 27b, and has a substantially "C" shaped cross-sectional configuration. The standing portion 27b and the standing portion 22b of the second sealing plate 22' are opposed toward each other via a small axial gap to form a labyrinth seal 28 therebetween. In addition, the second cylindrical portion 27c of the shield 27 and the shoulder 13 of the outer joint member 12 are opposed toward each other via a small radial gap to form a labyrinth seal 29 therebetween.

As can be clearly understood, according to this third embodiment since the shield 27 is arranged at the inboard side of the seal 11' as well as the labyrinth seal 28 between the seal 11' and the shield 27 and the labyrinth seal 29 between the shoulder 13 of the outer joint member 12 and the shield are formed in addition to the labyrinth seal 26 of the seal 11', it is possible to prevent ingress of foreign matter such as magnetic powder into a space between the magnetic encoder 19 and the wheel speed sensor 20 from the outside of the bearing apparatus although before the outer joint member 12 is inserted into the hub wheel 1 including a course in which the bearing apparatus is transferred to an assemble line of a manufacturer of automobile and also under severe circumstances in real running of vehicle.

### Fourth embodiment

Fig. 5 is an enlarged view showing a fourth embodiment of the wheel bearing apparatus incorporated with a wheel speed detecting apparatus of the present invention. This fourth embodiment is a modification of the third embodiment (Fig. 4) and is different from it only in the configuration of shield. Same reference numerals are used also in the fourth embodiment for designating same parts having same functions of parts as those used in the previous embodiments.

Also in this embodiment, a shield 30 is additionally arranged at the inboard side of the seal 11'. The shield 30 includes a first cylindrical portion 30a adapted to be fitted in the sensor holder 15, a standing portion 30b extending radially inward from the first cylindrical portion 30a, and a second cylindrical portion 30c extending axially from the standing portion 30b, and has a substantially "C" shaped cross-sectional configuration. The second cylindrical portion 30c and the shoulder 13 of the outer joint member 12 and the end surface of the inner ring 6' are opposed to each other via a small radial and axial gaps to form labyrinth seals 29 and 31 respectively therebetween.

As can be clearly understood, according to this fourth embodiment since the shield 30 is arranged at the inboard side of the seal 11' as well as labyrinth seals 29 and 31 are formed between the shield 30 and the shoulder 13 of the outer joint member 12 and the end surface of the inner ring 6' in addition to the labyrinth seal 26 of the seal 11', it is possible to prevent ingress of foreign matter such as magnetic powder into a space between the magnetic encoder 19 and the wheel speed sensor 20 from the outside of the bearing apparatus although before the outer joint member 12 is inserted into the hub wheel 1 including a course in which the bearing apparatus is transferred to an assemble line of a manufacturer of automobile and also under severe circumstances in real running of vehicle.

### Fifth embodiment

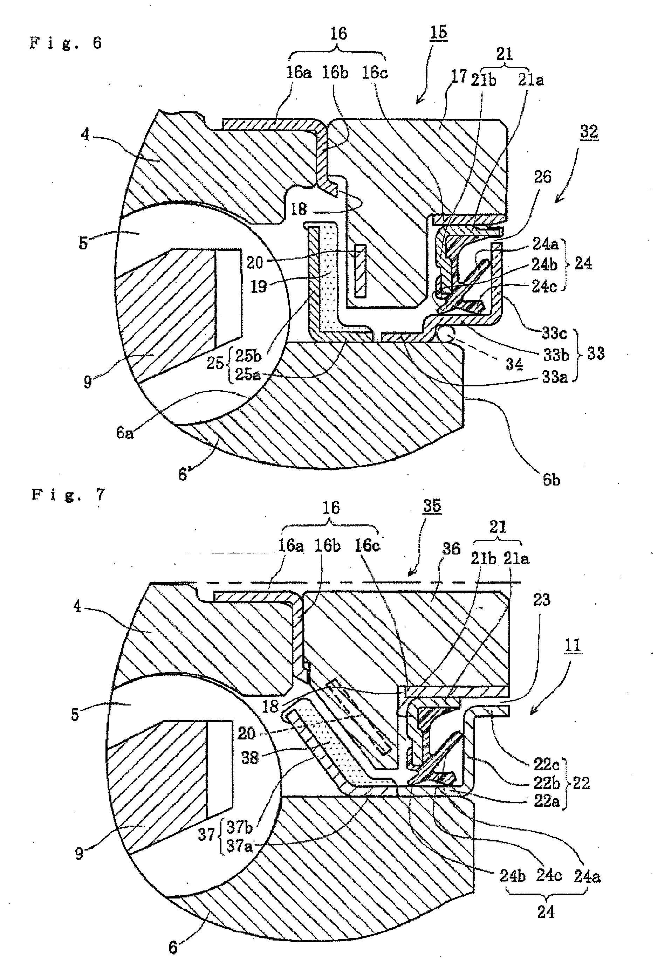

Fig. 6 is a partially enlarged view of a fifth embodiment of a wheel bearing apparatus incorporated with a wheel speed detecting apparatus. This fifth embodiment is different from the second embodiment (Fig. 3) only in a portion of the inboard seal. Same reference numerals are used also in the fifth embodiment for designating same parts having same functions of parts as those used in the previous embodiments.

In this embodiment the annular sensor holder 15 is mounted on the end of the outer member 4. The sensor holder 15 comprises an annular fitting member 16 and a holding member 17 connected to the annular fitting member 16.

An inboard seal 32 comprises first and second annular sealing plates 21 and 32 each having a substantially "L" shaped cross-sectional configuration mounted respectively on a cylindrical portion 16c of the annular fitting member 16 and the inner ring 6' and arranged oppositely toward each other. The first sealing plate 21 comprises a cylindrical portion 21a fitted in the sensor holder 15, and a standing portion 21b extending radially inward from one end of the cylindrical portion 21a. A sealing member 24 having a side lip 24a, a grease lip 24b and a medium lip 24c is made of elastic material such as rubber etc. and adhered to the sealing plate 21 via vulcanized adhesion.

On the other hand, the second sealing plate 33 is made by press-forming of austenitic stainless steel sheet (JIS SUS 304 etc.) or preserved cold rolled sheet (JIS SPCC etc.) and comprises a cylindrical portion 33a to be fitted on the inner ring 6', a larger cylindrical portion 33b formed larger than the cylindrical portion 33a, and a standing portion 33c extending radially outward from the larger cylindrical portion 33b.

The side lip 24a is contacted slidably with the standing portion 33c of the second sealing plate 33, and the grease lip 24b and medium lip 24c are contacted slidably with the larger cylindrical portion 33b of the second sealing plate 33. The tip end of the standing portion 33c of the second sealing plate 33 is opposed to the cylindrical portion 21a of the first sealing plate 21 via a small radial gap to form a labyrinth seal 26 23 therebetween. The provision of the labyrinth seal 26 makes it possible to further improve the sealing tightness of the inboard seal 32.

The larger cylindrical portion 33b of the second sealing plate 33 is projected toward the inboard side from the larger end face 6b of the inner ring 6'. Thus it is possible to mount the inboard seal 32 on the inner ring 6' having a smaller axial length (width) reduced to the minimum and thus to further reduce the weight and size of the bearing apparatus in order to improve the fuel consumption of vehicle.

According this embodiment, since the second sealing plate 33 is formed as having a two-step structure i.e. including the cylindrical portion 33a and the larger cylindrical portion 33b, it is possible to assure a sufficient rigidity of the second sealing plate 33 although the larger cylindrical portion 33b is projected from the larger end face 6b of the inner ring 6'.

In addition, a ring shaped elastic member 34 such as an "O" ring is elastically fitted within an annular space between the larger cylindrical portion 33b and the outer circumferential surface of the inner ring 6'. This makes it possible to remarkably improve the tightness of seal in the fitting portion between the larger cylindrical portion 33b and the inner ring 6' and thus to prevent ingress of rain water or dusts from the circumstances into the bearing for a long term.

### Sixth embodiment

Fig. 7 is a partially enlarged view of a sixth embodiment of a wheel bearing apparatus incorporated with a wheel speed detecting apparatus. This sixth embodiment is different from the first embodiment (Fig. 2) only in the structure of the detecting portion. Same reference numerals are used also in the sixth embodiment for designating same parts having same functions of parts as those used in the previous embodiments.

In this embodiment an annular sensor holder 35 is mounted on the end of the outer member 4. The sensor holder comprises the annular fitting member 16 and a holding member 36. The annular fitting member 16 is formed as a generally annular configuration and comprises a cylindrical fitting portion 16a to be fitted on the outer member 4, a flange portion 16b extending radially inward from the fitting portion 16a, and a cylindrical portion 16c axially extending from the flange portion 16b. A plurality of apertures 18 is formed circumferentially in the cylindrical portion 16c and the holding member 36 is molded by synthetic resin integrally with the annular fitting member 16. The sensor holder 35 is press fitted on the end of the outer member 4 with the seal 11 being mounted between the cylindrical portion 16c of the sensor holder 35 and the inner ring 6 and the flange portion 16b being contacted with the end face of the outer member 4. This makes it possible to reduce the radial dimension of the wheel bearing apparatus, to simplify the associated parts of wheel rotation speed detecting sensor, and thus to further improve the workability of assembly.

A base 25 of steel is arranged on the inner ring 6 oppositely to the inboard seal 11 with respect the holding member 17 of the sensor holder. The base of steel 37 is press fitted on the inner ring 6. The base 37 is formed as having a substantially "L" shaped cross-section by press forming of ferromagnetic steel such as ferritic stainless steel sheet (JIS SUS 430 etc.) or preserved cold rolled sheet (JIS SPCC etc.). The base 25 comprises a cylindrical portion 37a fitted on the inner ring 6, and a standing portion 37b extending radially outward at an from the cylindrical portion 37a. Adhered via vulcanized adhesion on the inboard surface of the standing portion 37a is a magnetic encoder 38 formed of elastomer such as rubber etc. with which magnetic powder is mingled. The magnetic encoder 38 has poles N and S alternately arranged along its circumferential direction and forms a rotary encoder for detecting the wheel rotation speed.

A wheel speed detecting sensor 20 is embedded within the holding member 36 and arranged oppositely to a magnetic encoder 19 via a predetermined radial gap. The wheel speed sensor 20 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

The inclination of the standing portion 37b on which the magnetic encoder 38 is adhered enables to increase the volume of the magnet and thus to increase the magnetic flux density of the magnetic encoder. This makes it possible to set a large air gap between the encoder 38 and the sensor 20 and thus to improve the freedom of design and to simplify the assembling workability. Also the inclination of the standing portion 37b enables to reduce the height of the sensor holder 35 itself and thus to contribute to reduce the size of the bearing portion.

### Seventh embodiment

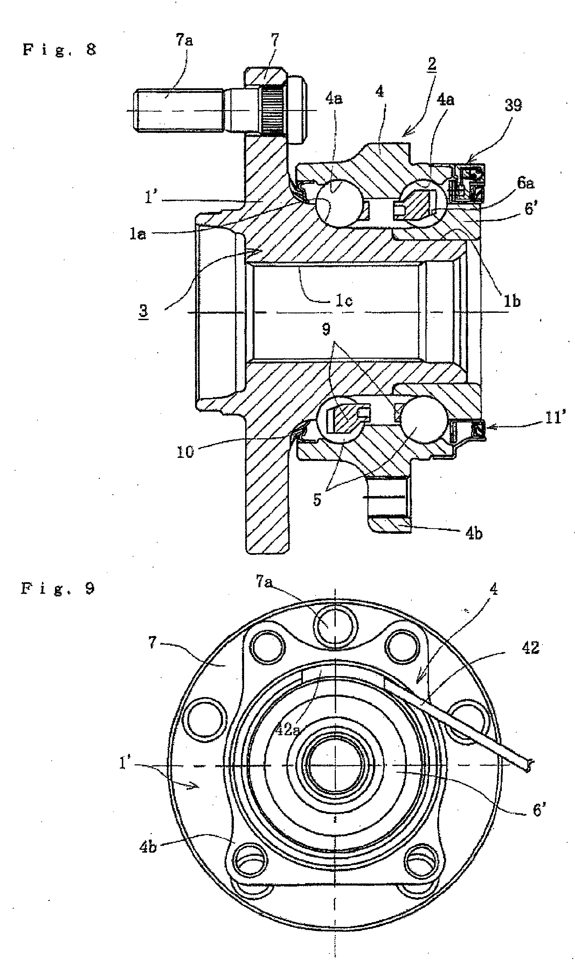

Fig. 8 is a longitudinal-section view of a seventh embodiment of a wheel bearing apparatus incorporated with a wheel speed detecting apparatus of the present invention; Fig.9 is a side elevation view of Fig. 8;

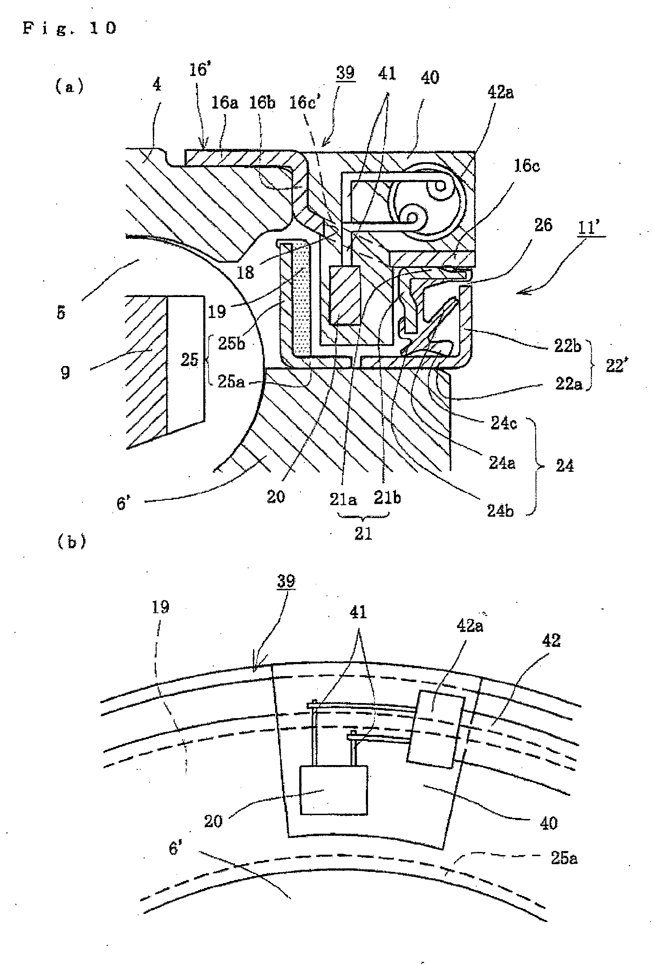

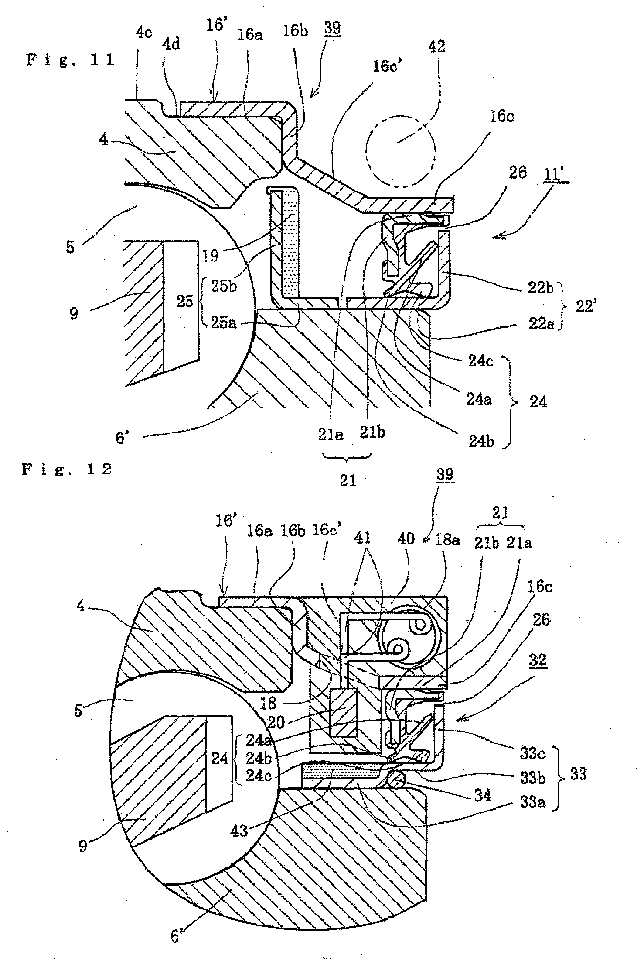

Figs. 10 (a) and 10 (b) are a partially enlarged cross sectional view and a side elevation view respectively of Fig. 8; and Fig. 11 is a partially enlarged cross sectional view of Fig. 8 at a position different from that of Fig. 10 (a). This seventh embodiment is different from the previous embodiments only in the structure of the harnesses and their associated parts. Same reference numerals are used also in the sixth embodiment for designating same parts having same functions of parts as those used in the previous embodiments.

This wheel bearing apparatus incorporated with a wheel speed detecting apparatus is that for a driving wheel in which a hub wheel 1' and a double row rolling bearing 2 are formed as a unit arrangement and thus has a structure of so-called a "third generation".
The hub wheel 1' is formed integrally with a wheel mount flange 7 for mounting a wheel (not shown) at its outboard end and hub bolts 7a are secured thereon at its circumferentially equidistant positions. The outer circumferential surface of the hub wheel 1' is formed with one inner raceway surface 1a (outboard side) corresponding to one of the double row outer raceway surfaces 4a and 4a and a cylindrical portion 1b extends axially from the inner raceway surface 1a. The inner circumferential surface of the hub wheel 1' is formed with serration (or spline) 1c. An inner ring 6' is press-fitted onto the cylindrical portion 1b and formed with the other inner raceway surface 6a (inboard side) corresponding to the other of the double row outer raceway surfaces 4a and 4a. In this description of the present invention, the inner member 3 comprises the hub wheel 1' and the inner ring 6' press-fitted on the hub wheel 1'.

A sensor holder 39 is fitted on the inboard end of the outer member 4. As shown in the partially enlarged view of Fig. 10 (a) The sensor holder 39 comprises an annular fitting member 16' and a holding member 40 connected to the annular fitting member 16'. The annular fitting member 16' is formed wholly as an annular body and comprises a cylindrical fitting portion 16a press-fitted on the outer circumferential surface of the outer member 4, a flange portion 16b extending radially inward from the fitting portion 16a, a conical portion 16c' extending axially inboard from the flange portion 16b, and a cylindrical portion 16c axially extending from the tip of the conical portion 16c'. The annular fitting member 16 is press-formed of stainless steel having corrosion resistance. In order to prevent having an adverse effect on the detecting performance of the sensor 20, it is preferable that the annular fitting member 16' is made of non-magnetic material such as austenitic stainless steel sheet (JIS SUS 304 etc.). This makes it possible to sustain high durability and detecting accuracy of seal for a long term.

The holding member 40 is molded integrally with the annular fitting member 16' by providing plurality of apertures 18 on the cylindrical portion 16c' thereof. The seal 11' is fitted in the cylindrical portion 16c of the annular fitting member 16' and the sensor holder 39 is press fitted on the end of the outer member 4 with the flange portion 16b being contacted with the end face of the outer member 4. Although it is shown that the holding member 40 is formed integrally with the annular fitting member 16', it is possible to mount the holding member 40 on the annular fitting member 16' with portions of the material of the holding member 40 being projected through the apertures 18.

The holding member 40 is formed as having a substantially "L" shaped cross-section of synthetic resin such as PA 66 (polyamide 66). The wheel rotation speed detecting sensor 20 is embedded in the holding member 40 so that it is arranged oppositely to an encoder 19 described more in detail later via a predetermined axial air gap. As schematically shown in Fig. 10 (b), terminals 41 for taking out output signal from the wheel rotation speed detecting sensor 20 extend radially outward and are connected to wire harnesses 42 circumferentially arranged along the end surface of the outer member 4 via a leading-out portion 42a. The wheel rotation speed detecting sensor 20, and the leading-out portion 42a for connecting the terminals 41 and wire harnesses are integrally molded within the holding member 40 by synthetic resin. This makes it possible to prevent damage and falling-out of the holding member 40 which would be caused by flying gravel during running of vehicle as well as generation of corrosion of the terminals and the leading-out portion 42a of the wire harnesses 42 and thus to improve the reliability of the bearing apparatus. In addition, it is possible to prevent the holding member 40 and the wire harnesses 42 from being projected radially outward from the outer member 4 and causing interference with the suspension apparatus (not shown) of vehicle. Furthermore since the leading-out portion 42a can be arranged within a space radially outward of the seal 11', it is possible to reduce the size of the holding member 40.

The inboard seal 11' comprises first and second annular sealing plates 21 and 22' each having a substantially "L" shaped cross-sectional configuration mounted respectively on the annular fitting member 16' of the sensor holder 39 and the inner ring 6' and arranged oppositely toward each other. The first sealing plate 21 comprises a cylindrical portion 21a fitted in the sensor holder 39, and a standing portion 21b extending radially inward from one end of the cylindrical portion 21a. A sealing member 24 having a side lip 24a, a grease lip 24b and a medium lip 24c is made of elastic material such as rubber etc. and adhered to the first sealing plate 21 via vulcanized adhesion.

On the other hand, the second sealing plate 22' is made by press-forming of austenitic stainless steel sheet (JIS SUS 304 etc.) or preserved cold rolled sheet (JIS SPCC etc.) and comprises a cylindrical portion 22a fitted on the inner ring 6', and a standing portion 22b extending radially outward from the cylindrical portion 22a. The side lip 24a is contacted slidably with the standing portion 22b of the second sealing plate 22', and the grease lip 24b and medium lip 24c are contacted slidably with the cylindrical portion 22a of the second sealing plate 22'. The tip of the standing portion 22b of the second sealing plate 22' forms a labyrinth seal 26 with being opposed to the cylindrical portion 21a of the first sealing plate 21 via a small radial gap. This makes it possible to further improve the sealing tightness of the inboard seal 11'.

The cylindrical portion 22a of the second sealing plate 22' is fitted on the inner ring 6' having an axial length (width) sufficient for resisting against a predetermined pulling out force and a portion of the cylindrical portion 22a and the standing portion 22b are projected toward the inboard side from the larger end face of the inner ring 6'. Thus it is possible to reduce the weight and size of the bearing apparatus.

Fig. 11 is a cross-sectional view at a position circumferentially offset from that of Fig. 10 (a). As shown in Fig. 11, The taking-out portion of the harnesses 42 can be arranged at a position radially inward from the outer circumferential surface of the knuckle fitting surface 4c i.e. at a position radially inward from the outer circumferential surface of the stepprd portion 4d of the outer member 4 by taking out the harnesses 42 from the sensor holder 39 with extending them circumferentially. Thus, mounting of the bearing apparatus on a body of vehicle the with the knuckle fitting surface 4c of the outer member 4 being fitted on the knuckle "N" of the vehicle body is not be interfered by the sensor 20 and the holder sensor 39. Accordingly the assembly of the bearing apparatus to the knuckle "N" can be simply carried out and axial expansion of the harnesses 42 connected to the sensor 20 can be prevented and thus interference between the harnesses 42 and the constant velocity universal joint (not shown) can be also prevented. In addition since the harnesses 42 are taken out in a circumferential direction, a whole axial length of the bearing apparatus is not required to increase.

According to this embodiment, since the sensor holder 39 is mounted on the annular fitting member 16' fitted on the end of the outer member 4, and the annular fitting member 16' comprises cylindrical fitting portion 16a fitted on the stepped portion 4d of the outer member 4, the flange portion 16b extending radially inward from the cylindrical fitting portion 16a, the conical portion 16c' projecting toward inboard side from the flange portion 16b, and the cylindrical portion 16c axially extending from the tip of the conical portion 16c', it is possible to arrange the sensor holder 39 in a radially inward space from the outer circumferential surface of the knuckle fitting surface 4c of the outer member 4.Especially, since the annular fitting member 16' for mounting the sensor holder 39 has a partially conical configuration, it is possible to create a radial space and thus it is possible to prevent the sensor holder 39 from being projected beyond the outer circumferential surface of the outer member 4.

### Eighth embodiment

Fig. 12 is a partially enlarged view of an eighth embodiment of a wheel bearing apparatus incorporated with a wheel speed detecting apparatus of the present invention. This eighth embodiment is different from the seventh embodiment (Fig. 10) only in the structure of the detecting portion. Same reference numerals are used also in this embodiment for designating same parts having same functions of parts as those used in the seventh embodiment.

In this embodiment, the seal 32 is mounted in an annular space formed by the cylindrical portion 16c of the annular fitting member 16' and the inner ring 6' and is press fitted on the end of the outer member 4 with the flange portion 16b of the annular fitting member 16' being contacted with the end face of the outer member 4.

An inboard seal 32 comprises first and second annular sealing plates 21 and 33 each having a substantially "L" shaped cross-sectional configuration mounted respectively on the sensor holder 39 and the inner ring 6' and arranged oppositely toward each other. The second sealing plate 33 comprises a cylindrical portion 33a fitted on the inner ring 6', a larger cylindrical portion 33b extending axially from the cylindrical portion 33a, and a standing portion 33c extending radially outward from the larger cylindrical portion 33c. The side lip 24a of the first sealing plate 21 is contacted slidably with the standing portion 33c of the second sealing plate 33, and the grease lip 24b and medium lip 24c are contacted slidably with the larger cylindrical portion 33b of the second sealing plate 33. Adhered via vulcanized adhesion on the outer circumferential surface of the cylindrical portion 33a of the second sealing plate 33 is a magnetic encoder 43 formed of elastomer such as rubber etc. with which magnetic powder is mingled. The magnetic encoder 43 has poles N and S alternately arranged along its circumferential direction and forms a rotary encoder for detecting the wheel rotation speed.

In addition, a ring shaped elastic member 34 such as an O ring is elastically fitted within an annular space between the larger cylindrical portion 33b of the second sealing plate 33 and the outer circumferential surface of the inner ring 6'. This makes it possible to remarkably improve the tightness of seal and thus to prevent ingress of rain water or dusts from the circumstances into the bearing for a long term. Although it is shown in Fig. 12 that the magnetic encoder 43 is integrally adhered to the second sealing plate 33, the magnetic encoder 43 can be separately arranged from the second sealing plate 33.

As described above, according to this embodiment, since the wheel speed sensor 20 is arranged within the sensor holder 39, and the seal 32 is arranged at the inboard side of the wheel speed sensor 20, it is possible to prevent ingress of foreign matter such as magnetic powder into a space between the magnetic encoder 43 and the wheel speed sensor 20 from the outside of the bearing apparatus. Accordingly it is also possible to remarkably improve the reliability of detection of the wheel rotation speed, to simplify the associated parts of the sensor 20, and thus to improve the workability in assembly of the wheel bearing apparatus.

### Ninth embodiment

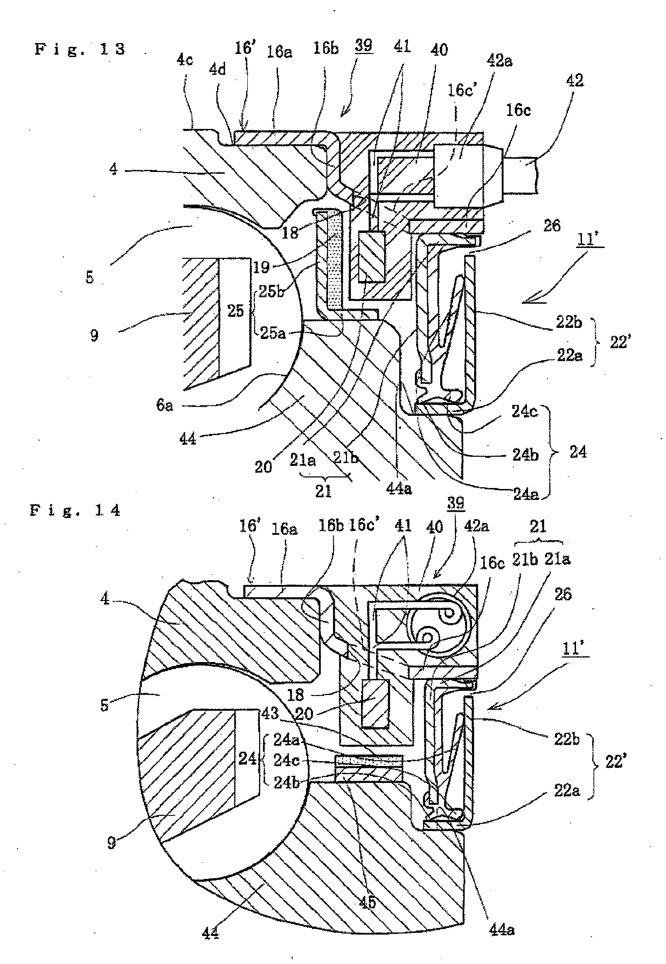

Fig. 13 is a partially enlarged view of an ninth embodiment of a wheel bearing apparatus incorporated with a wheel speed detecting apparatus of the present invention. This embodiment is different from the seventh embodiment (Fig. 10) only in the structure of the inboard seal. Same reference numerals are used also in this embodiment for designating same parts having same functions of parts as those used in the previous embodiment.

In this embodiment, the sensor holder 39 is mounted on the inboard end of the outer member 4. The sensor holder 39 comprises the annular fitting member 16' and the holding member 40. And an inboard seal 11' is mounted between the cylindrical portion 16c of the annular fitting member 16' and an inner ring 44.

The inboard seal 11' comprises first and second annular sealing plates 21 and 22' each having a substantially "L" shaped cross-sectional configuration formed by press working. The first sealing plate 21 is fitted on the cylindrical portion 16c of the annular fitting member 16'. The larger end portion of the inner ring 44 is formed with a stepped portion 44a of smaller diameter and the second sealing plate 22' is fitted on the stepped portion 44a. The first and second sealing plates 21and 22' are arranged oppositely toward each other.

According to this embodiment, since the inboard seal 11' is mounted in an annular space formed between the stepped portion 44a formed on the inner ring 44 and the sensor holder 39, it is possible to assure the height of the seal 11' and thus to remarkably improve the sealing tightness.

### Tenth embodiment

Fig. 14 is a partially enlarged view of an tenth embodiment of a wheel bearing apparatus incorporated with a wheel speed detecting apparatus of the present invention. This embodiment is a modification of the ninth embodiment (Fig. 13) and different only in the structure of the detecting portion. Same reference numerals are used also in this embodiment for designating same parts having same functions of parts as those used in the previous embodiment.

According to this embodiment, the magnetic encoder 43 is fitted on the stepped portion 44a via a base 45. The base 45 is formed as having an annular ring configuration by press forming of ferromagnetic steel such as ferritic stainless steel sheet (JIS SUS 430 etc.) or preserved cold rolled sheet (JIS SPCC etc.). Adhered via vulcanized adhesion on the outer circumferential surface of the base 45 is a magnetic encoder 43 formed of elastomer such as rubber etc. with which magnetic powder is mingled. The magnetic encoder 19 has poles N and S alternately arranged along its circumferential direction and forms a rotary encoder for detecting the wheel rotation speed.

Also in this embodiment, since the wheel speed sensor 20 is arranged within the sensor holder 39, and the seal 11' is arranged at the inboard side of the wheel speed sensor 20, it is possible to prevent ingress of foreign matter such as magnetic powder into a space between the magnetic encoder 43 and the wheel speed sensor 20 from the outside of the bearing apparatus. Accordingly it is also possible to remarkably improve the reliability of detection of the wheel rotation speed.

### Applicability in Industry

The wheel bearing apparatus incorporated with a wheel speed detecting apparatus of the present invention can be applied to wheel bearing apparatus in which any type of wheel speed detecting apparatus is included.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A wheel bearing apparatus incorporated with a wheel speed detecting apparatus comprising:
- an outer member (4) having double row outer raceway surfaces (4a) formed on its inner circumferential surface;
- an inner member (3) including a hub wheel (1') having a wheel mount flange (7) formed integrally therewith at one end thereof and a cylindrical portion (1b) axially extending from the wheel mount flange (7), and an inner ring (6', 44) fitted on the cylindrical portion (1b) of the hub wheel (1'), double row inner raceway surfaces (1a, 6a) opposite to the double row outer raceway surfaces (4a) being formed on the outer circumferential surfaces of the hub wheel (1') and inner ring (6', 44) respectively;
- an inboard side end of said outer member (4) is positioned outboard of an inboard side end of said inner ring (6', 44);
- double row rolling elements (5) arranged between the outer and inner raceway surfaces (4a; 1a, 6a);
- an encoder (19, 43) mounted on the outer circumferential surface of the inner ring (6', 44);
- an annular sensor holder (39) arranged on the end of the outer member (4) oppositely to the encoder (19, 43), said sensor holder (39) including an annular fitting member (16') and a holding member (40), said annular fitting member (16') including an axially extending portion (16c) radially spaced from said inner ring (6', 44);
- a wheel rotation speed detecting sensor (20) molded integrally with the sensor holder (39) and arranged oppositely to the encoder (19, 43) via a predetermined radial gap, **characterized in: that** the encoder (19, 43) has an annular ring configuration and its characteristics varying alternately and equidistantly along its circumferential direction; a seal (11', 32) is arranged at the inboard side of the wheel rotation speed detecting sensor (20), said seal including a first annular sealing plate (21) fit on an inner circumferential surface of the axially extending portion (16c) of the annular fitting member (16') of the sensor holder (39), the seal (11', 32) including second annular sealing plate (22', 33) mounted on the inner ring (6', 44) and said first and second annular plates oppose each other so that the seal (11', 32) is sandwiched between the axially extending portion (16c) of the annular fitting member (16') of the sensor holder (39) and the inner ring (6', 44); the annular fitting member (16') comprises a cylindrical fitting portion (16a) press-fitted on the outer circumferential surface of the outer member (4), a flange portion (16b) extending radially inward from the fitting portion (16a), a conical portion (16c') extending axially inboard from the flange portion (16b), and a cylindrical portion (16c) axially extending from the tip of the conical portion (16c').

2. A wheel bearing apparatus incorporated with a wheel speed detecting apparatus of claim 1 wherein the encoder (19, 43) is formed of a magnetic encoder in which poles N and S are alternately arranged along its circumference.

3. A wheel bearing apparatus incorporated with a wheel speed detecting apparatus of claim 1 or 2 wherein the sensor holder (15,39) includes an annular fitting member (16') of steel sheet and a holding member (40), the fitting member (16') including a cylindrical fitting portion (16a) press-fitted on the outer circumferential surface of the outer member (4), a flange portion (16b) extending radially inward from the fitting portion (16a) and adapted to be close contacted on the end surface of the outer member (4), a conical portion (16c') and a cylindrical portion (16c) extending axially from the portion (16c'), and the first sealing plate (21) being fitted in the cylindrical portion (16c).

4. A wheel bearing apparatus incorporated with a wheel speed detecting apparatus of any one of claims 1 - 3 wherein the annular fitting member (16') is press-formed of non-magnetic steel plate having corrosion resistance.

5. A wheel bearing apparatus incorporated with a wheel speed detecting apparatus of any one of claims 1 - 4 wherein a smaller diameter portion (44a) is formed on the outer circumferential surface of the inner ring (44), and wherein the seal (11') is mounted within an annular space formed between the smaller diameter portion (44a) and the sensor holder (39).

6. A wheel bearing apparatus incorporated with a wheel speed detecting apparatus of any one of claims 1 - 5 wherein the second sealing plate (22') has a cylindrical portion (22a) and a standing portion (22b) extending radially outward from the cylindrical portion (22a), and wherein a sealing member (24) is integrally adhered to the first sealing plate (21) via vulcanized adhesion and lips (24a, 24b, 24c) of the sealing member (24) are sliding contacted with the cylindrical portion (22a) and the standing portion (22b).

7. A wheel bearing apparatus incorporated with a wheel speed detecting apparatus of any one of claims 1 - 5 wherein the second sealing plate (33) has a cylindrical portion (33a), a larger cylindrical portion (33b) and a standing portion (33c) extending radially outward from the larger cylindrical portion (33a), and wherein a sealing member (24) is integrally adhered to the first sealing plate (21) via vulcanized adhesion and lips (24a, 24b, 24c) of the sealing member (24) are sliding contacted with the larger cylindrical portion (33b) and the standing portion (33c).

8. A wheel bearing apparatus incorporated with a wheel speed detecting apparatus of claim 7 wherein a ring shaped elastic member (34) is elastically fitted within an annular space between the larger cylindrical portion (33b) and the outer circumferential surface of the inner ring (6').

9. A wheel bearing apparatus incorporated with a wheel speed detecting apparatus of any one of claims 6 - 8 wherein the cylindrical portion (22a, 33b) is projected from a larger end face of the inner ring (6').

10. A wheel bearing apparatus incorporated with a wheel speed detecting apparatus of any one of claims 1 - 9 wherein the encoder (19, 43) and the wheel rotation speed detecting sensor (20) are arranged at a predetermined angle.

11. A wheel bearing apparatus incorporated with a wheel speed detecting apparatus of any one of claims 1 - 10 wherein a shield (27, 30) having a substantially "C" shaped cross-sectional configuration is arranged at the inboard side of the seal (11') so that it is opposed to a shoulder (13) of the outer joint member (12) via a small radial gap to form a labyrinth seal (29) therebetween.

12. A wheel bearing apparatus incorporated with a wheel speed detecting apparatus of claim 11 wherein the shield (27) comprises a first cylindrical portion (27a) fitted into the sensor holder (15), a standing portion (27b) extending radially inward from the first cylindrical portion (27a) and a second cylindrical portion (27c) axially extending from the standing portion (27b), and wherein the standing portion (27b) is opposed to the second sealing plate (22') via a small axial gap to form a labyrinth seal (28) therebetween.

13. A wheel bearing apparatus incorporated with a wheel speed detecting apparatus of claim 11 wherein the shield (30) comprises a first cylindrical portion (30a) fitted into the sensor holder (15), a standing portion (30b) extending radially inward from the first cylindrical portion (30a) and a second cylindrical portion (30c) axially extending from the standing portion (30b), and wherein the second cylindrical portion (30c) is opposed to the end face of the inner ring (6') via a small axial gap to form a labyrinth seal (31) therebetween.

14. A wheel bearing apparatus incorporated with a wheel speed detecting apparatus of claim 1, wherein the sensor holder (39) is arranged radially inward from the outer circumferential surface of a knuckle fitting surface of the outer member (4), that terminals (41) for taking out output signal from the wheel rotation speed detecting sensor (20) extend radially outward and are connected to wire harnesses (42) circumferentially arranged along the end surface of the outer member (4).

## Patentansprüche

1. Radlagervorrichtung mit eingegliederter
Radgeschwindigkeitserkennungsvorrichtung, umfassend:
- ein äußeres Glied (4) mit zweireihige äußeren Laufringflächen (4a), die auf seiner Innenumfangsfläche ausgebildet sind;
- ein inneres Glied (3), das eine Radnabe (1') mit einem Radanbringungsflansch (7), welcher einstückig damit an einem Ende davon ausgebildet ist, und einem zylindrischen Abschnitt (1b), der axial vom Radanbringungsflansch (7) her verläuft, und einen Innenring (6', 44) enthält, welcher an den zylindrischen Abschnitt (1b) der Radnabe (1') gepasst ist, wobei zweireihige innere Laufringflächen (1a, 6a) den zweireihigen äußeren Laufringflächen (4a) gegenüberliegend auf den Außenumfangsflächen der Radnabe (1') bzw. des Innenrings (6', 44) ausgebildet sind;
- wobei ein nach innen gerichtetes Seitenende des äußeren Glieds (4) außerhalb einer nach innen gerichteten Seite des Innenrings (6', 44) angeordnet ist;
- zweireihige Rollelemente (5), die zwischen den äußeren und inneren Laufringflächen (4a; 1a, 6a) angeordnet sind;
- einen Geber (19, 43), der auf der Außenumfangsfläche des Innenrings (6', 44) angebracht ist;
- einen ringförmigen Sensorhalter (39), der an dem Ende des äußeren Glieds (4), das dem Geber (19, 43) gegenüberliegt, angeordnet ist, wobei der Sensorhalter (39) ein ringförmiges Passglied (16') und ein Halteglied (40) enthält, wobei das ringförmige Passglied (16') einen axial verlaufenden Abschnitt (16c) enthält, welcher radial vom Innenring (6', 44) beabstandet ist;
- einen Raddrehgeschwindigkeitserkennungssensor (20), der einstückig mit dem Sensorhalter (39) geformt und dem Geber (19) über einen vorgegebenen radialen Spalt gegenüberliegend angeordnet ist, **dadurch gekennzeichnet, dass**: der Geber (19, 43) eine ringförmige Ringkonfiguration aufweist und seine Eigenschaften abwechselnd und abstandsgetreu entlang seiner Umfangsrichtung variieren; eine Dichtung (11', 32) auf der nach innen gerichteten Seite des Raddrehgeschwindigkeitserkennungssensors (20) angeordnet ist, wobei die Dichtung eine erste ringförmige Dichtungsplatte (21) enthält, die auf eine Innenumfangsfläche des axial verlaufenden Abschnitts (16c) des ringförmigen Passglieds (16') des Sensorhalters (39) gepasst ist, wobei die Dichtung (11', 32) eine zweite ringförmige Dichtungsplatte (22', 33) enthält,, die auf dem Innenring (6', 44) angebracht ist, und die ersten und zweiten ringförmigen Dichtungsplatten einander derart gegenüberliegen, dass die Dichtung (11', 32) in Sandwichbauweise zwischen dem axial verlaufenden Abschnitt (16c) des ringförmigen Passglieds (16') des Sensorhalters (39) und dem Innenring (6', 44) eingelegt ist; das ringförmige Passglied (16') einen zylindrischen Passabschnitt (16a), der auf die Außenumfangsfläche des äußeren Glieds (4) aufgepresst ist, einen Flanschabschnitt (16b), der vom Passabschnitt (16a) radial einwärts verläuft, einen konischen Abschnitt (16c'), der vom Flanschabschnitt (16b) axial nach innen gerichtet verläuft, und einen zylindrischen Abschnitt (16c) umfasst, der axial von der Spitze des konischen Abschnitts (16c') her verläuft.

2. Radlagervorrichtung mit eingegliederter
Radgeschwindigkeitserkennungsvorrichtung nach Anspruch 1, wobei der Geber (19, 43) aus einem magnetischen Geber ausgebildet ist, bei dem N-Pole und S-Pole abwechselnd seinen Umfang entlang angeordnet sind.

3. Radlagervorrichtung mit eingegliederter
Radgeschwindigkeitserkennungsvorrichtung nach einem der Ansprüche 1 oder 2, wobei der Sensorhalter (15, 39) ein ringförmiges Passglied (16') aus Stahlblech und ein Halteglied (40) enthält, wobei das Passglied (16') einen zylindrischen Passabschnitt (16a), der auf die Außenumfangsfläche des äußeren Glieds (4) aufgepresst ist, einen Flanschabschnitt (16b), der vom Passabschnitt (16a) her radial einwärts verläuft und dazu geeignet ist, auf der Endfläche des äußeren Glieds (4) eng berührt zu werden, einen konischen Abschnitt (16c') und einen zylindrischen Abschnitt (16c) enthält, der axial vom Abschnitt (16c') her verläuft, und wobei die erste Dichtungsplatte (21) in den zylindrischen Abschnitt (16c) gepasst ist.

4. Radlagervorrichtung mit eingegliederter
Radgeschwindigkeitserkennungsvorrichtung nach einem der Ansprüche 1 bis 3, wobei das ringförmige Passglied (16') aus nichtmagnetischem Stahlblech mit Korrosionsbeständigkeit pressgeformt ist.

5. Radlagervorrichtung mit eingegliederter
Radgeschwindigkeitserkennungsvorrichtung nach einem der Ansprüche 1 bis 4, wobei ein Abschnitt (44a) mit kleinerem Durchmesser auf der Außenumfangsfläche des Innenrings (44) ausgebildet ist, und wobei die Dichtung (11') innerhalb eines ringförmigen Raums angebracht ist, der zwischen dem Abschnitt (44a) mit kleinerem Durchmesser und dem Sensorhalter (39) ausgebildet ist.

6. Radlagervorrichtung mit eingegliederter
Radgeschwindigkeitserkennungsvorrichtung nach einem der Ansprüche 1 bis 5, wobei die zweite Dichtungsplatte (22') einen zylindrischen Abschnitt (22a) und einen stehenden Abschnitt (22b) aufweist, der vom zylindrischen Abschnitt (22a) her radial auswärts verläuft, und wobei ein Dichtungsglied (24) einstückig auf die erste Dichtungsplatte (21) aufvulkanisiert ist und Ränder (24a, 24b, 24c) des Dichtungsglieds (24) mit dem zylindrischen Abschnitt (22a) und dem stehenden Abschnitt (22b) in Gleitkontakt stehen.

7. Radlagervorrichtung mit eingegliederter
Radgeschwindigkeitserkennungsvorrichtung nach einem der Ansprüche 1 bis 5, wobei die zweite Dichtungsplatte (33) einen zylindrischen Abschnitt (33a), einen größeren zylindrischen Abschnitt (33b) und einen stehenden Abschnitt (33c) aufweist, der vom größeren zylindrischen Abschnitt (33b) her radial auswärts verläuft, und wobei ein Dichtungsglied (24) einstückig auf die erste Dichtungsplatte (21) aufvulkanisiert ist und Ränder (24a, 24b, 24c) des Dichtungsglieds (24) mit dem größeren zylindrischen Abschnitt (33b) und dem stehenden Abschnitt (33c) in Gleitkontakt stehen,

8. Radlagervorrichtung mit eingegliederter
Radgeschwindigkeitserkennungsvorrichtung nach Anspruch 7, wobei ein ringförmiges elastisches Glied (34) elastisch innerhalb eines ringförmigen Raums zwischen dem größeren zylindrischen Abschnitt (33b) und der Außenumfangsfläche des Innenrings (6') eingepasst ist.

9. Radlagervorrichtung mit eingegliederter
Radgeschwindigkeitserkennungsvorrichtung nach einem der Ansprüche 6 bis 8, wobei der zylindrische Abschnitt (22a, 33b) von einer größeren Endfläche des Innenrings (6') vorsteht.

10. Radlagervorrichtung mit eingegliederter
Radgeschwindigkeitserkennungsvorrichtung nach einem der Ansprüche 1 bis 9, wobei der Geber (19, 43) und der Raddrehgeschwindigkeitserkennungssensor (20) in einem vorgegebenen Winkel angeordnet sind.

11. Radlagervorrichtung mit eingegliederter
Radgeschwindigkeitserkennungsvorrichtung nach einem der Ansprüche 1 bis 10, wobei ein Schirm (27, 30) mit einer im Wesentlichen "C"-förmigen Querschnittskonfiguration derart auf der nach innen gerichteten Seite der Dichtung (11') angeordnet ist, dass er einer Schulter (13) des Außengelenkglieds (12) über einen kleinen radialen Spalt gegenüberliegt, um eine Labyrinthdichtung (29) dazwischen auszubilden.

12. Radlagervorrichtung mit eingegliederter
Radgeschwindigkeitserkennungsvorrichtung nach Anspruch 11, wobei der Schirm (27) einen ersten zylindrischen Abschnitt (27a), der in den Sensorhalter (15) gepasst ist, einen stehenden Abschnitt (27b), der vom ersten zylindrischen Abschnitt (27a) her radial einwärts verläuft, und einen zweiten zylindrischen Abschnitt (27c) umfasst, der vom stehenden Abschnitt (27b) her axial verläuft, und wobei der stehende Abschnitt (27b) der zweiten Dichtungsplatte (22') über einen kleinen axialen Spalt gegenüberliegt, um eine Labyrinthdichtung (28) dazwischen auszubilden.

13. Radlagervorrichtung mit eingegliederter
Radgeschwindigkeitserkennungsvorrichtung nach Anspruch 11, wobei der Schirm (30) einen ersten zylindrischen Abschnitt (30a), der in den Sensorhalter (15) gepasst ist, einen stehenden Abschnitt (30b), der vom ersten zylindrischen Abschnitt (30a) her radial einwärts verläuft, und einen zweiten zylindrischen Abschnitt (30c) umfasst, der vom stehenden Abschnitt (30b) her axial verläuft, und wobei der zweite zylindrische Abschnitt (30c) der Endfläche des Innenrings (6') über einen kleinen axialen Spalt gegenüberliegt, um eine Labyrinthdichtung (31) dazwischen auszubilden.

14. Radlagervorrichtung mit eingegliederter
Radgeschwindigkeitserkennungsvorrichtung nach Anspruch 1, wobei der Sensorhalter (39) von der Außenumfangsfläche einer Achsschenkelpassfläche des äußeren Glieds (4) radial einwärts verläuft, wobei Anschlüsse (41) zum Abnehmen eines Ausgangssignals vom
Raddrehgeschwindigkeitserkennungssensor (20) radial auswärts verlaufen und mit Kabelbäumen (42) verbunden sind, die umfänglich entlang der Endfläche des äußeren Glieds (4) angeordnet sind.

## Revendications

1. Dispositif de palier de roue incorporé dans un dispositif de détection de vitesse de roue comprenant :
- un élément extérieur (4) ayant des surfaces de chemin de roulement (4a) extérieures à double rangée formées sur sa surface circonférentielle intérieure,
- un élément intérieur (3) incluant un moyeu de roue (1') ayant un flasque de montage de roue (7) formé en un seul tenant avec celui-ci et une portion cylindrique (1b) s'étendant axialement à partir du flasque de montage de roue (7) et une bague intérieure (6', 44) ajustée sur la portion cylindrique (1b) du moyeu de roue (1'), des surfaces de chemin de roulement intérieures à double rangée (1a, 6a) opposées aux surfaces de chemin de roulement extérieures à double rangée (4a) étant formées sur les surfaces circonférentielles extérieures du moyeu de roue (1') et la bague intérieure (6', 44) respectivement ;
- une extrémité de côté intérieur dudit élément extérieur (4) est positionnée à l'extérieur d'une extrémité de côté intérieur de ladite bague intérieure (6', 44),
- des éléments de roulement à double rangée (5) agencés entre les surfaces de chemin de roulement extérieure et intérieure (4a ; 1a, 6a) ;
- un codeur (19, 43) monté sur la surface circonférentielle extérieure de la bague intérieure (6', 44) ;
- un support de capteur annulaire (39) agencé sur l'extrémité de l'élément extérieur (4) opposée au codeur (19,43), ledit support de capteur (39) incluant un élément d'ajustement annulaire (16') et un élément de retenue (40), ledit élément d'ajustement annulaire (16') incluant une portion s'étendant axialement (16c) radialement espacée de ladite bague intérieure (6', 44) ;
- un capteur de détection de vitesse de rotation de roue (20) moulé en un seul tenant avec le support de capteur (39) et agencé à l'opposé du codeur (19, 43) via un interstice radial prédéterminé, **caractérisé en ce que** le codeur (19, 43) possède une configuration en anneau annulaire et ses caractéristiques varient alternativement et équidistance le long de sa direction circonférentielle ; un joint d'étanchéité (11', 32) est agencé au niveau du côté intérieur du capteur de détection de vitesse de rotation de roue (20), ledit joint d'étanchéité incluant une première plaque d'étanchéité annulaire (21) ajustée sur une surface circonférentielle intérieure de la portion s'étendant axialement (16c) de l'élément d'ajustement annulaire (16') du support de capteur (39), le joint d'étanchéité (11', 32) incluant une seconde plaque d'étanchéité annulaire (22', 33) montée sur la bague intérieure (6', 44) et lesdites première et seconde plaque annulaires sont opposées l'une à l'autre de sorte que le joint d'étanchéité (11', 32) soit intercalé entre la portion s'étendant axialement (16c) de l'élément d'ajustement annulaire (16') du support de capteur (39) et la bague intérieure (6', 44) ; l'élément d'ajustement annulaire (16') comprend une portion d'ajustement cylindrique (16a) ajustée par pressage sur la surface circonférentielle extérieure de l'élément extérieur (4), une portion de flasque (16b) s'étendant radialement vers l'intérieur depuis la portion d'ajustement (16a), une portion conique (16c') s'étendant axialement à l'intérieur de la portion de flasque (16b), et une portion cylindrique (16c) s'étendant axialement à partir de la pointe de la portion conique (16c').

2. Dispositif de palier de roue incorporé dans un dispositif de détection de vitesse de roue selon la revendication 1, dans lequel le codeur (19, 43) est formé d'un codeur magnétique dans lequel les pôles N et S sont alternativement disposés le long de sa circonférence.

3. Dispositif de palier de roue incorporé dans un dispositif de détection de vitesse de roue selon les revendications 1 ou 2, dans lequel le support de capteur (15, 39) inclut un élément d'ajustement annulaire (16') en tôle d'acier et un élément de retenue (40), l'élément d'ajustement (16') incluant une portion d'ajustement cylindrique (16a) ajustée par pressage sur la surface circonférentielle extérieure de l'élément extérieur (4), une portion de flasque (16b) s'étendant radialement à l'intérieur à partir de la portion d'ajustement (16a) et adaptée afin de contacter étroitement la surface d'extrémité de l'élément extérieur (4), une portion conique (16c') et une portion cylindrique (16c) s'étendant axialement à partir de la portion (16c') et la première plaque d'étanchéité (21) étant ajustée dans la portion cylindrique (16c).

4. Dispositif de palier de roue incorporé dans un dispositif de détection de vitesse de roue selon une quelconque des revendications 1 à 3, dans lequel l'élément d'ajustement annulaire (16') est formé par pressage d'une plaque d'acier non magnétique ayant une résistance à la corrosion.

5. Dispositif de palier de roue incorporé dans un dispositif de détection de vitesse de roue selon une quelconque des revendications 1 à 4, dans lequel une portion à diamètre plus petit (44a)est formée sur la surface circonférentielle extérieure de la bague intérieure (44), et dans lequel le joint d'étanchéité (11') est montée à l'intérieur d'un espace annulair formé entre la portion à diamètre plus petit (44a) et le support de capteur (39).

6. Dispositif de palier de roue incorporé dans un dispositif de détection de vitesse de roue selon une quelconque des revendications 1 à 5, dans lequel la seconde plaque d'étanchéité (22') possède une portion cylindrique (22a) et une portion dressée (22b) s'étendant radialement vers l'extérieur à partir de la portion cylindrique (22a), et dans lequel un élément d'étanchéité (24) adhère en un seul tenant à la première plaque d'étanchéité (21) via une adhérence vulcanisée et les lèvres (24a, 24b, 24c) de l'élément d'étanchéité (24) contactent avec coulissement la portion cylindrique (22a) et la portion dressée (22b).

7. Dispositif de palier de roue incorporé dans un dispositif de détection de vitesse de roue selon une quelconque des revendications 1 à 5, dans lequel la seconde plaque d'étanchéité (33) possède une portion cylindrique (33a), une portion cylindrique plus grande (33b) et une portion dressée (33c) s'étendant radialement vers l'extérieur à partir de la portion cylindrique plus grande (33a), et dans lequel un élément d'étanchéité (24) adhère en un seul tenant à la première plaque d'étanchéité (21) via une adhérence vulcanisée et les lèvres (24a, 24b, 24c) de l'élément d'étanchéité (24) contactent avec coulissement la portion cylindrique plus grande (33b) et la portion dressée (33c).

8. Dispositif de palier de roue incorporé dans un dispositif de détection de vitesse de roue selon la revendication 7, dans lequel un élément élastique en forme de bague (24) est ajusté élastiquement à l'intérieur d'un espace annulaire entre la portion cylindrique plus grande (33b) et la surface circonférentielle extérieure de la bague intérieure (6').

9. Dispositif de palier de roue incorporé dans un dispositif de détection de vitesse de roue selon une quelconque des revendications 6 à 8, dans lequel la portion cylindrique (22a, 33b) se projette à partir d'une face d'extrémité plus grande de la bague intérieure (6').

10. Dispositif de palier de roue incorporée dans un dispositif de détection de vitesse de roue selon une quelconque des revendications 1 à 9, dans lequel le codeur (19, 43) et le capteur de détection de vitesse de rotation de roue (20) sont disposés à un angle prédéterminé.

11. Dispositif de palier de roue incorporé dans un dispositif de détection de vitesse de roue selon une quelconque des revendications 1 à 10, dans lequel un blindage (27, 30) ayant une configuration de section transversale substantiellement en forme de « C » est disposée au niveau du côté intérieur du joint d'étanchéité (11'), de sorte qu'il soit opposé à un épaulement (13) de l'élément de joint extérieur (12) via un petit interstice radial afin de former un joint à labyrinthe (29) entre ceux-ci.

12. Dispositif de palier de roue incorporé dans un dispositif de détection de vitesse de roue selon la revendication 11, dans lequel le blindage (27) comprend une première portion cylindrique (27a) ajustée dans le support de capteur (15), une portion dressée (27b) s'étendant radialement vers l'intérieur à partir de la première portion cylindrique (27a) et une seconde portion cylindrique (27c) s'étendant axialement à partir de la portion dressée (27b), et dans lequel la portion dressée (27b) est opposée à la seconde plaque d'étanchéité (22') via un petit interstice axial afin de former un joint à labyrinthe (28) entre ceux-ci.

13. Dispositif de palier de roue incorporé dans un dispositif de détection de vitesse de roue selon la revendication 11, dans lequel le blindage (30) comprend une première portion cylindrique (30a) ajustée dans le support de capteur (15), une portion dressée (30b) s'étendant radialement vers l'intérieur à partir de la première portion cylindrique (30a) et une seconde portion cylindrique (30c) s'étendant axialement à partir de la portion dressée (30b), et dans lequel la seconde portion cylindrique (30c) est opposée à la face d'extrémité de la bague intérieure (6') via un petit interstice axial afin de former un joint à labyrinthe (31) entre ceux-ci.

14. Dispositif de palier de roue incorporé dans un dispositif de détection de vitesse de roue selon la revendication 1, dans lequel le support de capteur (39) est agencé radialement vers l'intérieur à partir de la surface circonférentielle extérieure d'une surface d'ajustement de rotule de l'élément extérieur (4), des bornes (41) pour prélever le signal de sortie du capteur de détection de vitesse de rotation de roue (20) s'étendent radialement vers l'extérieur et sont connectées aux faisceaux de câbles (42) agencés circonférentiellement le long de la surface d'extrémité de l'élément extérieur (4).
